# EUROPÄISCHE PATENTANMELDUNG

(11) **EP 2 942 334 A1**
(43) Veröffentlichungstag der Anmeldung: **11.11.2015**
(21) Anmeldenummer: 14167160.2
(22) Anmeldetag: 06.05.2014
(51) Int. Cl.: C04B 26/02, C04B 28/02, C04B 20/00, C09D 5/18

(54) **Schichtsystem für ein Bauteil**

(71) Anmelder: Siemens Aktiengesellschaft, 80333 München (DE)
(72) Erfinder: Ettler, Manuel, 50171 Kerpen (DE); Kocdemir, Bora, 45357 Essen (DE); Litinsky, Alexander, 45470 Mülheim (DE); Mashkin, Andrey, 50672 Köln (DE); Minninger, Dieter, 46535 Dinslaken (DE); Zimmermann, Adam, 45478 Mülheim a.d. Ruhr (DE)

(57) **Zusammenfassung**

Die Erfindung betrifft ein Schichtsystem (4) für ein Bauteil umfassend ein Substrat (1) und eine Schutzschicht (3), wobei die Schutzschicht (3) einen Stoff aufweist, in den ein Partikel (6) umfassender Füllstoff angeordnet ist, der bei einer Temperaturerhöhung das Volumen deutlich ändert.

## Beschreibung

Die Erfindung betrifft ein Schichtsystem für ein Bauteil umfassend ein Substrat und eine Schutzschicht, die auf dem Substrat angeordnet ist.

Des Weiteren betrifft die Erfindung ein Verfahren zum Beschichten eines Bauteils, wobei das Bauteil ein Substrat aufweist und auf dieses Substrat eine Matrix aufgebracht wird.

In Kraftwerksanlagen werden unter anderem Gasturbinen, Dampfturbinen und Generatoren eingesetzt. Diese Maschinen weisen einige Komponenten auf, deren Oberflächen eine Temperatur im Bereich zwischen 60°C und 220°C aufweisen. Solche Oberflächen müssen von der Umgebung thermisch isoliert werden, da solch hohe Temperaturen auf der Oberfläche bei einer Berührung zu Verletzungen führen könnten und daher ein Berührungsschutz ausgebildet sein muss. Des Weiteren sollten diese Oberflächen thermisch isoliert sein, damit ein Wärmetransport an die Umgebung vermieden wird, was zu einem Energieverlust führen würde. Außerdem können durch eine thermische Isolierung thermische Spannungen reduziert werden. Es ist bekannt, die thermische Isolierung durch Gehäuse bzw. Wärmeschutzmäntel zu realisieren. Allerdings erfordert dies ein angepasstes Thermoisolierkonzept sowie zusätzlich Elemente, die von Baureihe zu Baureihe verschieden sein können.

Beispielsweise werden in Dampfturbinen die Innengehäuse wegen der Isolierung und der Temperaturhomogenisierung über das gesamte Gehäuse hinweg mit einem Wärmeschutzmantel versehen. Allerdings muss hierzu für eine Niederdruck-Teilturbine der Wärmeschutzmantel neu konstruiert werden. Des Weiteren muss für jede konstruktive Änderung der Wärmeschutzmantel angepasst werden, was dazu führt, dass die Montage des Wärmeschutzmantels aufwändig und zeitintensiv ist.

Die Erfindung möchte hier Abhilfe schaffen und eine weitere Möglichkeit angeben, eine Thermoisolierung einfach und kostengünstig auf ein Bauteil aufzubringen.

Gelöst wird diese Aufgabe durch ein Schichtsystem für ein Bauteil umfassend ein Substrat und eine Schutzschicht, die auf dem Substrat angeordnet ist, wobei die Schutzschicht eine Matrix und in der Matrix einen Partikel umfassenden Füllstoff aufweist.

Des Weiteren wird die Aufgabe gelöst durch ein Verfahren zum Beschichten eines Bauteils, wobei das Bauteil ein Substrat aufweist und auf dieses Substrat eine Matrix aufgebracht wird, wobei in der Matrix ein Füllstoff angeordnet wird, der Partikel umfasst.
Das Substrat ist beispielsweise eine Bauteilwand.

Vorteilhafte Weiterbildungen sind in den Unteransprüchen angegeben.

Die Erfindung geht von dem Aspekt aus, dass eine niederviskose sprühfähige Farbe eingesetzt wird, die in einem ersten Zustand einen unexpandierten mikropartikulären Füllstoff aufweist. Dieser mikropartikuläre Füllstoff hat in diesem unexpandierten Zustand eine Größe, die im Wesentlichen 3 Vol.-% bis 30 Vol.-% der Schutzschicht ausmacht. Dieser mikropartikuläre Füllstoff wird dabei derart ausgewählt, dass die Viskosität der Farbe sich nicht wesentlich ändert. Die Farbe wird auch als Matrix bezeichnet.

Infolge der geringen Viskosität der Matrix ist das Aufbringen der Matrix durch Sprühen oder Anstreichen sehr gut realisierbar.

Die Matrix mit den in der Matrix enthaltenen mikropartikulären Füllstoffen wird auf die Oberfläche des Substrats aufgetragen. Anschließend erfolgt eine Aushärtung oder Vorgelierung der Matrix. Daraufhin wird Wärme zugeführt, die von extern zugeführt wird oder durch einen Reaktionsprozess in der Matrix erfolgen kann oder allein durch die Betriebswärme der Bauteile hervorgerufen werden kann. Das Hinzuführen von Wärme führt zu einer Erweichung der äußeren Hülle der mikropartikulären Füllstoffe. Dadurch wird im Inneren der Partikel gegebenenfalls eine chemische Reaktion hervorgerufen und die Partikel expandieren. Diese Expansion führt zu einer Erhöhung des Volumenanteils des mikropartikulären Füllstoffs, der einen Wert von über 60 Vol.-% des Schichtsystems ausmachen kann.

Es entsteht auf der Oberfläche des Substrats eine schaumartige Struktur, da die expandierten mikropartikulären Füllstoffe im Inneren hohl sind. Bei einem Volumenanteil von 60 Vol.-% ist das Schichtsystem noch geschlossen porig.

Vorteilhafterweise weist der Füllstoff bei einer ersten Temperatur T₁, insbesondere Raumtemperatur, im Wesentlichen einen Volumenanteil von 3 Vol.-% bis 30 Vol.-% der Schutzschicht auf.

Vorteilhafterweise weist der Füllstoff bei einer zweiten Temperatur T₂, wobei gilt 40°C<T₂<240°C, insbesondere 60°C<T₂<220°C, im Wesentlichen einen Volumenanteil von größer als 60 Vol.-%, insbesondere größer als 55 Vol.-%, der Schutzschicht auf.
Weitere Temperaturbereiche sind: 40°C<T₂<220°C, 40°C<T₂<200°C, 40°C<T₂<180°C, 40°C<T₂<160°C, 60°C<T₂<240°C, 80°C<T₂<240°C, 100°C<T₂<240°C, 80°C<T₂<220°C oder 60°C<T₂<200°C.

Vorteilhafterweise kommen thermoexpandierende Mikrohohlkugeln als Partikel des Füllstoffs zum Einsatz. Vorteilhafterweise weisen die Mikrohohlkugeln eine aus polymeren oder anorganischen Materialien wie Glas oder Keramik ausgebildete Hülle auf.

Vorteilhafterweise ist die Hülle zwischen 0,1µm und 3µm dick.

Vorteilhafterweise weisen die Partikel eine Beschichtung aus anorganischen oder organischen Stoffen auf den Partikeln auf. Vorteilhafterweise ist in den Mikrohohlkugeln ein Gas, eine reagierende Substanz oder eine aufkochende Substanz angeordnet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Ausführungsbeispiele der Erfindung werden nachfolgend anhand der Zeichnungen beschrieben. Diese soll die Ausführungsbeispiele nicht maßgeblich darstellen, vielmehr ist die Zeichnung, nur zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigen:
- Figur 1: ein bei einer ersten Temperatur T₁ aufgebrachtes Schichtsystem;
- Figur 2: ein Schichtsystem bei einer Temperatur T₂ > T₁;
- Figur 3: ein Schichtsystem bei einer Temperatur T₃ > T₂.

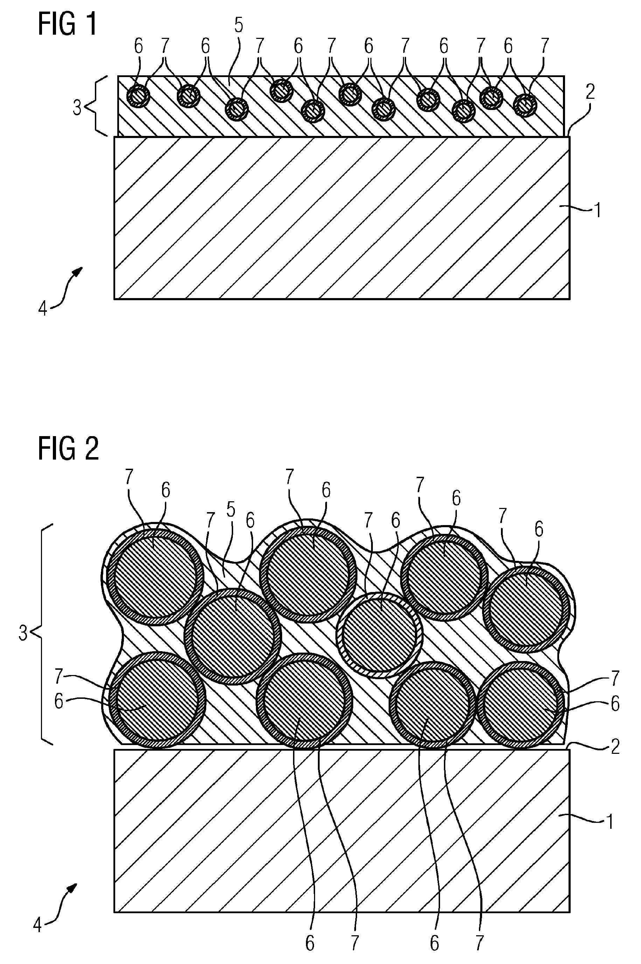

Figur 1 zeigt eine Komponente in einer Kraftwerksanlage. Das kann bspw. ein Bauteil sein für einen Generator, eine Dampfturbine oder eine Gasturbine. Das Bauteil umfasst ein Substrat 1. Dieses Substrat 1 kann Temperaturen im Bereich von 60°C bis 220°C aufweisen und muss daher gegen die Umgebung thermisch isoliert werden. Die Erfindung ist auch auf größere Temperaturbereiche anwendbar.

Das Substrat 1 ist beispielsweise eine Bauteilwand.

Auf eine Oberfläche 2 des Substrats 1 wird eine Schutzschicht 3 angeordnet. Die Schutzschicht 3 und das Substrat 1 bilden ein Schichtsystem 4. Die Schutzschicht 3 umfasst eine Matrix 5. In dieser Matrix 5 ist ein Partikel 6 umfassender Füllstoff angeordnet.

Der Partikel 6 umfassende Füllstoff weist bei einer ersten Temperatur T₁, insbesondere Raumtemperatur, im Wesentlichen einen Volumenanteil von 3 Vol.-% bis 30 Vol.-% der Schutzschicht 3 auf.

Die Matrix 5 hat dabei eine derartige Viskosität, dass diese durch Sprühen oder Anstreichen gut auf die Oberfläche 2 des Substrats 1 aufgebracht werden kann. Der Partikel 6 umfassende Füllstoff erhöht die Viskosität der Matrix 5, die auch als Grundfarbe bezeichnet werden kann, nur unwesentlich.

Nachdem die Schutzschicht 3 auf die Oberfläche 2 aufgetragen wurde, erfolgt eine Aushärtung oder Vorgelierung der Matrix 5. Durch eine Zufuhr von Wärme, die extern erfolgen kann oder durch Reaktionsprozesse in der Matrix erfolgt oder die durch den Betrieb des Bauteils an sich erfolgen kann, erweicht eine äußere Hülle 7 der Partikel 6. Dadurch wird im Inneren der Partikel 6 eine chemische Reaktion hervorgerufen und die Partikel 6 expandieren. Der Partikel 6 umfassende Füllstoff weist hierbei bei einer zweiten Temperatur T₂, wobei gilt 40°C<T₂<240°C, insbesondere 60°C<T₂<220°C, im Wesentlichen einen Volumenanteil von größer als 60 Vol.-%, insbesondere größer als 55 Vol.-% der Schutzschicht 3 auf.
Weitere Temperaturbereiche sind: 40°C<T₂<220°C, 40°C<T₂<200°C, 40°C<T₂<180°C, 40°C<T₂<160°C, 60°C<T₂<240°C, 80°C<T₂<240°C, 100°C<T₂<240°C, 80°C<T₂<220°C oder 60°C<T₂<200°C.

Die Figur 2 zeigt das Schichtsystem 4 bei einer gegenüber der Figur 1 anderen Temperatur. Der in Figur 2 dargestellte Zustand zeigt das Schichtsystem 4 bei einer Temperatur T₂, die größer ist als die Temperatur T₁ wie in Figur 1 dargestellt. Deutlich ist zu sehen, dass die Partikel 6 ihr Volumen deutlich vergrößert haben. Der Volumenanteil der Partikel 6 liegt nunmehr bei ca. 60 Vol.-%. In diesem Zustand sind die mechanischen Eigenschaften des Schichtsystems 4 noch weitestgehend mit den von konventionellen Wärmeisolierfarben vergleichbar. Die Partikel 6 des Füllstoffs sind vorzugsweise thermoexpandierbare Mikrohohlkugeln. Die Hülle 7 dieser Mikrohohlkugeln ist aus einem Polymer oder aus anorganischen Materialien wie Glas oder Keramik ausgebildet, wobei die Dicke der Hülle 0,1µm bis 3µm beträgt. Des Weiteren sind die Partikel des Füllstoffs im Inneren hohl.

Des Weiteren weisen die Partikel 6 eine Beschichtung aus organischen oder anorganischen Stoffen auf. In den Mikrohohlkugeln ist ein Gas, eine reagierende Substanz oder eine aufkochende Substanz angeordnet. Die Beschichtung kann die Materialeigenschaften gravierend verändern. Das Einwirken der Energie in Form von Wärme oder in Form von Strahlung, wie z.B. ultraviolettes Licht, führt dazu, dass die Hülle 7 der Hohlkugeln weich wird und das in den Hohlkugeln enthaltene Gas oder die reagierende bzw. aufkochende Substanz zu einer Expansion führt.

Durch die geeignete Wahl des Kugelschalenmaterials und des Füllmediums kann der Grad der möglichen Expansion der Mikrohohlkugeln bei einer vorgegebenen Temperatur sowie die Reversibilität oder Einmaligkeit der Expansion eingestellt werden. Die Kugeldurchmesser der Partikel 6 sind im unexpandierten Zustand, wie er in Figur 1 dargestellt ist, bei 10µm bis 40µm. Im expandierten Zustand kann der Kugeldurchmesser bis zu 200µm betragen. Die Wandstärke der Hülle 7 liegt bei eini-gen 10µm im unexpandierten Zustand und im expandierten Zustand bis einige Millimeter oder geringer.

Die Schutzschicht 3 kann nach dem Aufbringen derart behandelt werden, dass die gesamte Komponente in einem Ofen getrocknet wird. Weitere Anwendungen solch einer Schutzschicht 3 sind bspw. Lärmschutz und Brandschutz.

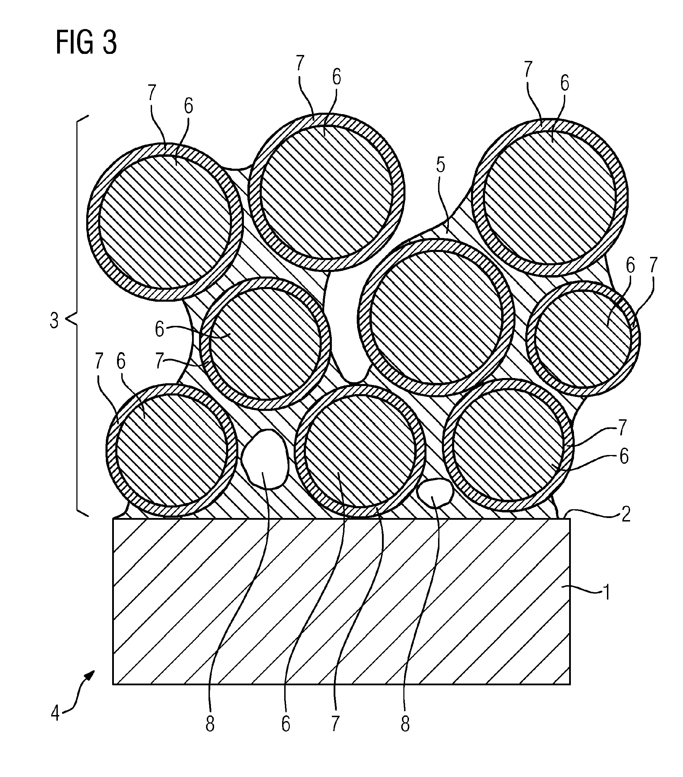

Die Figur 3 zeigt einen Zustand, der bei einer noch größeren Temperatur T₃ liegt als der in der Figur 2 dargestellte Zustand bei T₂. Es gilt T₃ > T₂. Deutlich ist zu sehen, dass der Durchmesser der Partikel 6 noch größer geworden ist. Des Weiteren ist deutlich zu erkennen, dass Lunker 8 in der Matrix 5 entstehen. Die mechanischen Eigenschaften der Schutzschicht 3 sind bei diesen Temperaturen vergleichsweise nachteilig im Vergleich zu der Schutzschicht 3 gemäß Figur 2.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Schichtsystem (4) für ein Bauteil
umfassend ein Substrat (1) und eine Schutzschicht (3), die auf dem Substrat (1) angeordnet ist,
wobei die Schutzschicht (3) eine Matrix (5) und einen in der Matrix (5) angeordneten Partikel (6) umfassenden Füllstoff aufweist.

2. Schichtsystem (4) nach Anspruch 1,
wobei der Füllstoff bei einer ersten Temperatur T₁, insbesondere Raumtemperatur,
im Wesentlichen einen Volumenanteil von 3 Vol.-% bis 30 Vol.-% der Schutzschicht aufweist.

3. Schichtsystem (4) nach Anspruch 1 oder 2,
wobei der Füllstoff bei einer zweiten Temperatur T₂,
wobei gilt 40°C<T₂<240°C,
insbesondere 60°C<T₂<220°C,
im Wesentlichen einen Volumenanteil von größer als 60 Vol.-%,
insbesondere größer als 55 Vol.-% der Schutzschicht aufweist.

4. Schichtsystem (4) nach einem der vorhergehenden Ansprüche,
wobei die Partikel (6) des Füllstoffs im Inneren hohl ausgebildet sind.

5. Schichtsystem (4) nach Anspruch 4,
wobei als Partikel des Füllstoffs thermoexpandierbare Mikrohohlkugeln zum Einsatz kommen.

6. Schichtsystem nach Anspruch 5,
wobei die Mikrohohlkugeln eine aus Polymeren oder anorganischen Materialien wie Glas oder Keramik ausgebildete Hülle (7) aufweist.

7. Schichtsystem (4) nach Anspruch 6,
wobei die Hülle (7) zwischen 0,1µm und 3µm dick ist.

8. Schichtsystem (4) nach einem der Ansprüche 4 bis 7,
wobei die Partikel (6) eine Beschichtung aus organischen oder anorganischen Stoffen auf den Partikeln (6) aufweist.

9. Schichtsystem (4) nach einem der Ansprüche 5 bis 8,
wobei in den Mikrohohlkugeln ein Gas, eine reagierende Substanz oder eine aufkochende Substanz angeordnet ist.

10. Verfahren zum Beschichten eines Bauteils,
wobei das Bauteil ein Substrat (1) aufweist und auf dieses Substrat (1) eine Matrix (5) aufgebracht wird,
wobei in der Matrix (5) ein Füllstoff angeordnet wird, der Partikel (6) umfasst.

11. Verfahren nach Anspruch 10,
wobei die Matrix (5) durch Sprühen oder Anstreichen aufgebracht wird.

12. Verfahren nach Anspruch 11,
wobei nach dem Aufbringen der Matrix (5) eine Aushärtung oder eine Vorgelierung erfolgt.

13. Verfahren nach Anspruch 12,
wobei Energie zugeführt wird, die zu einem Expandieren der Partikel (6) führt.

14. Verfahren nach Anspruch 13,
wobei Wärme oder Strahlung, insbesondere UV-Strahlung zugeführt wird.

15. Verfahren nach einem der Ansprüche 10 bis 14,
wobei die Partikel (6) mit organischen oder anorganischen Stoffen beschichtet werden.
